**Europäisches Patentamt**

**European Patent Office**

**Office européen des brevets**

(19)

(11) Numéro de publication : **0 313 451 B1**

(12) # FASCICULE DE BREVET EUROPEEN

(45) Date de publication du fascicule du brevet :
04.12.91 Bulletin 91/49

(51) Int. Cl.⁵ : **F16C 32/00**

(21) Numéro de dépôt : **88402616.2**

(22) Date de dépôt : **17.10.88**

(54) **Perfectionnement au palier hydrodynamique, et procédé de montage d'un tel palier.**

(30) Priorité : **23.10.87 FR 8714670**

(43) Date de publication de la demande :
**26.04.89 Bulletin 89/17**

(45) Mention de la délivrance du brevet :
**04.12.91 Bulletin 91/49**

(84) Etats contractants désignés :
**DE GB IT**

(56) Documents cités :
**EP-A- 0 095 961**
**DE-A- 2 322 715**
**GB-A- 1 028 552**

(73) Titulaire : **ABG SEMCA S.A.**
**408, avenue des Etats-Unis**
**F-31016 Toulouse Cédex (FR)**

(72) Inventeur : **Malabre, Christian**
**THOMSON-CSF SCPI 19, avenue de Messine**
**F-75008 Paris (FR)**
Inventeur : **Jambou, André**
**THOMSON-CSF SCPI 19, avenue de Messine**
**F-75008 Paris (FR)**

(74) Mandataire : **Ruellan-Lemonnier, Brigitte et al**
**THOMSON-CSF SCPI**
**F-92045 PARIS LA DEFENSE CEDEX 67 (FR)**

EP 0 313 451 B1

## Description

La présente invention concerne un palier hydrodynamique, plus particulièrement un palier à feuilles. Elle concerne aussi un procédé de montage d'un tel palier.

Dans les machines tournantes à grande vitesse de rotation, on utilise le plus souvent des paliers à film fluide de sustentation évitant tout contact entre les surfaces solides ; ces paliers étant destinés à supporter et à guider les arbres desdites machines. Le type de palier le plus couramment utilisé est le palier hydrodynamique dans lequel le film fluide est un film engendré par la rotation de l'arbre ou le déplacement d'une autre pièce. Ces paliers hydrodynamiques présentent donc l'avantage d'être autonomes.

Le plupart du temps, les paliers hydrodynamiques sont des paliers à feuilles. Dans ce cas, des feuilles minces cintrées sont fixées dans l'alésage d'un corps de palier de façon à se recouvrir partiellement et à constituer une surface interne flottante formant des coins de sustentation engendrant la création du film fluide entre les feuilles et l'arbre lorsque la vitesse de rotation de ce dernier atteint une valeur suffisante.

Pour simplifier la fabrication et la maintenance de tels paliers, on a proposé dans le brevet européen EP-A-095961, de réaliser les feuilles sous forme d'une cartouche autonome qui est ensuite insérée dans l'alésage du corps de palier. Comme décrit dans le brevet européen EP-A-095961, le palier est réalisé en fabriquant une cartouche autonome destinée à constituer l'ensemble fonctionnel interne du palier, ladite cartouche étant composée de feuilles minces cintrées fixées les unes par rapport aux autres avec des parties de recouvrement, et de façon à réaliser un ensemble autonome possédant, d'une part, une surface flottante interne adaptée pour se disposer autour de l'arbre et conditionner lors de la rotation de celui-ci, la formation d'un entre fluide entre l'arbre et la surface interne et, d'autre part, une surface externe périphérique de diamètre correspondant à celui de l'alésage du corps du palier, en insérant ladite cartouche ainsi obtenue dans l'alésage du corps du palier et eu l'immobilisant en rotation et en translation axiale par rapport à celui-ci. Aussi, pour permettre l'insertion de ladite cartouche dans l'alésage, il est donc nécessaire de laisser un certain jeu de montage entre ces deux éléments.

D'autre part, selon un mode de réalisation préférentiel, la cartouche autonome est fabriquée en fixant les feuilles les unes sur les autres par soudage, notamment par deux points de soudure réalisés aux extrémités de chaque feuille. Or, les soudures rendant les feuilles solidaires les unes des autres entraînent des déformations à chaque extrémité de la cartouche. Ainsi, pour pouvoir réaliser le montage de la cartouche à l'intérieur de l'alésage, il est nécessaire de prévoir un certain jeu. Toutefois, ce jeu le montage s'ajoute au jeu nécessaire à un fonctionnement correct du palier hydrodynamique. Ceci entraîne un jeu total trop important sous l'effet de la pression s'exerçant sur toute la partie centrale du palier.

La présente invention a donc pour but de remédier à cet inconvénient en assurant un jeu de fonctionnement correct sur toute la longueur du palier.

En conséquence, la présente invention a pour objet un palier hydrodynamique du type décrit dans le brevet européen EP-A-095961, caractérisé en ce que la feuille entourant la cartouche est souple et est fixée par une de ses extrémités sur une génératrice extérieure de la cartouche, son autre extrémité étant libre.

L'utilisation d'une feuille souple entourant la surface extérieure de la cartouche augmente donc la raideur de celle-ci et permet de remédier, au moins en partie, aux déformations dues aux soudures appa-raissant à chaque extrémité de la cartouche.

Selon un mode de réalisation préférentiel, la feuille souple est constituée par un clinquant en acier. Cette feuille souple est de préférence rectangulaire et la longueur entre l'extrémité fixée sur la génératrice et l'extrémité libre est inférieure à la circonférence de la cartouche de manière à laisser, lors du montage, un jeu de quelques millimètres. D'autre part, la dimension de l'extrémité de la feuille souple fixée sur la génératrice de la cartouche est inférieure à la longueur de cette génératrice. La feuille souple est aussi fixée sur la cartouche par soudure, les deux points de soudure étant réalisés sur les bords de fixation de la cartouche situés aux extrémités de celle-ci.

En fait, l'ensemble constitué de la cartouche entourée par la feuille souple présente un diamètre supérieur au diamètre de l'alésage du corps de palier destiné à recevoir cet ensemble. Aussi, le montage de cet ensemble est réalisé en plaçant le corps du palier dans une enceinte chauffée, en insérant la cartouche munie de la feuille souple dans l'alésage du corps du palier, et en l'immobilisant en rotation et en translation axiale par rapport à celui-ci puis en laissant refroidir le tout. L'enceinte est, de préférence, chauffée à une température supérieure ou égale à 200°C. De ce fait, on réalise une dilatation du corps de palier qui permet d'introduire l'ensemble formé de la cartouche et de la feuille souple sans effort à l'intérieur de l'alésage du corps de palier. En effet le corps de palier est en général réalisé en un alliage léger qui présente à une température de 200°C une dilatation supérieure à 0,2 millimètres. Lors du refroidissement, l'ensemble constitué de la cartouche et de la feuille souple est donc enserré dans le corps de palier sans jeu de montage.

D'autres caractéristiques et avantages de la présente invention apparaîtront à la lecture de la description d'un mode de réalisation faite ci-après avec référence aux dessins ci-annexés dans lesquels :

— la figure 1 est une vue en coupe transversale d'une cartouche autonome conforme au brevet européen EP-A-095961 ;
— la figure 2 est une vue en perspective d'une des feuilles minces composant la cartouche de figure 1 ;
— la figure 3 est une vue schématique en coupe transversale d'une cartouche autonome conforme à la présente invention ;
— la figure 4 est une vue en perspective d'un palier hydrodynamique muni d'une cartouche autonome conforme à la présente invention, et
— les figures 5a et 5b représentent schématiquement une vue en coupe longitudinale axiale d'un palier hydrodynamique conforme au palier décrit dans le brevet européen EP-A-095961 et au palier de la présente invention.

Pour simplifier la description, dans les figures les mêmes éléments présentent les mêmes références.

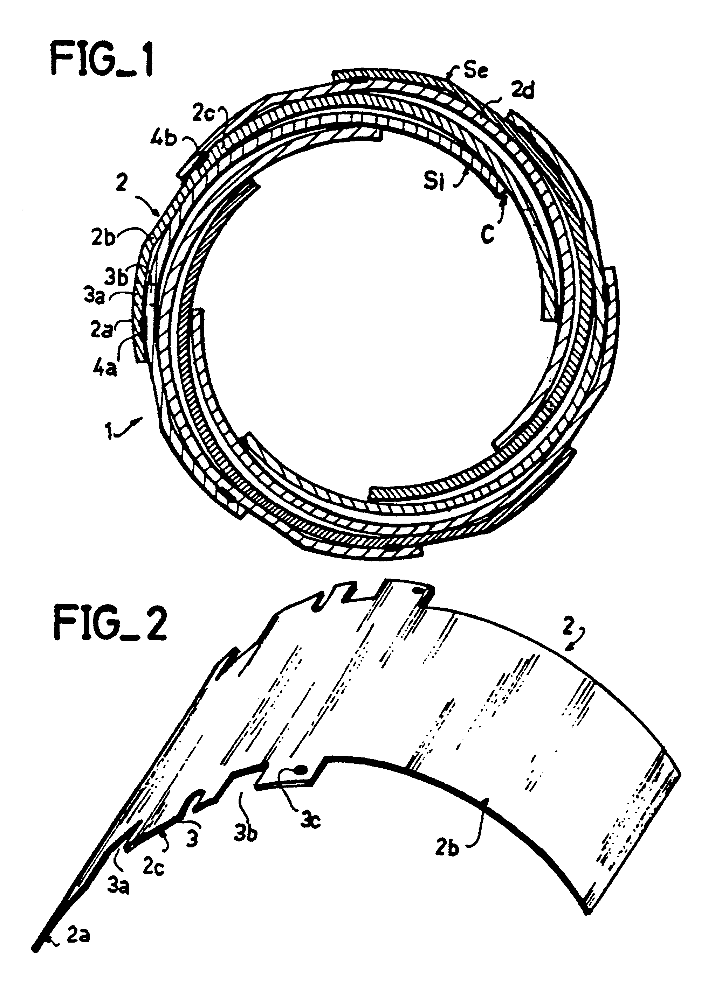

La cartouche autonome 1 représentée à titre d'exemple sur la figure 1 est réalisée au moyen de plusieurs feuilles minces cintrées, à savoir huit feuilles dans l'exemple représenté, chaque feuille étant du type de celles schématisées sur la figure 2.

Ainsi, chaque feuille 2 réalisée en tôle mince comprend sur sa longueur, un talon d'extrémité 2a, un léger décrochement 2b suivi d'une portion 2c, dite portion interne de fixation, et une partie fonctionnelle 2d qui prolonge la portion interne de fixation 2c. Chaque feuille est découpée de manière que son talon d'extrémité 2a et sa portion interne de fixation 2c soit légèrement plus large que sa partie fonctionnelle 2d, ce talon et cette portion interne possédant ainsi des marges latérales 3. Ces marges sont pourvues de crantages tels que 3a et 3b, destinés à l'immobilisation de la cartouche 1 dans le corps de palier. Dans l'exemple représenté, deux crans ont été représentés sur chaque marge 3 pour que, en position adaptée, le cran 3a d'une feuille se superpose avec le cran 3b de la feuille du dessus.

De plus, les marges 3 de chaque feuille comprennent des trous de positionnement tels que 3c qui servent à la fabrication de la cartouche 1.

Les diverses faces 2 de la cartouche sont soudées les unes sur les autres par des points de soudure tels que schématisés en 4a et 4b à la figure 1. Ainsi, chaque feuille 2 est fixée d'une part en 4a par son talon d'extrémité 2a sur la feuille du dessous et d'autre part en 4b par sa portion interne de fixation 2c sur la feuille du dessus. De préférence, les points de soudure sont pratiqués au niveau des deux marges latérales 3 des feuilles.

Ainsi, la cartouche décrite ci-dessus forme un ensemble autonome dans lequel les feuilles ont une position précise les unes par rapport aux autres. Lorsque les feuilles sont ainsi positionnées, leur talon externe forme une surface externe périphérique SE dont le diamètre est sensiblement égal au diamètre de l'alésage du corps de palier, cependant que leurs parties fonctionnelles 2d forment une surface interne flottante SI, de diamètre correspondant à celui de l'arbre et de forme adaptée pour provoquer l'effet hydrodynamique recherché, c'est-à-dire la création de coins de sustentation dans les zones C situées à la limite de deux feuilles.

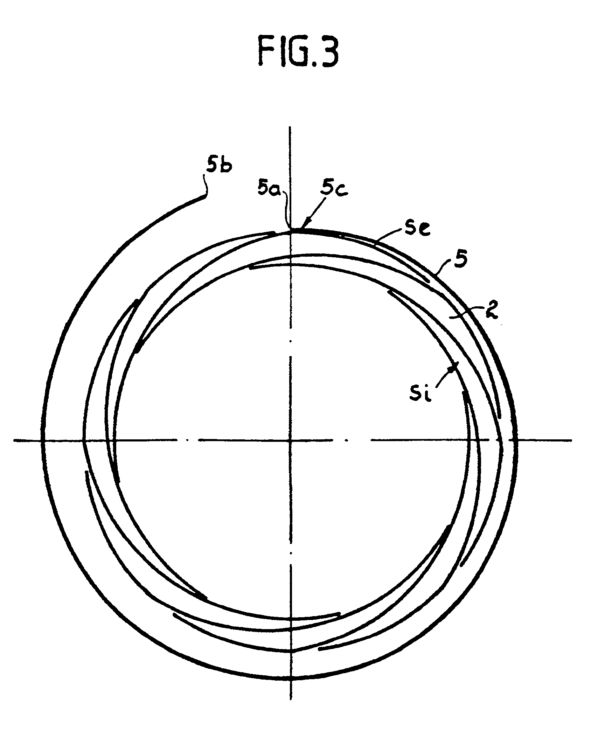

Comme représenté sur la figure 3, conformément à la présente invention, on a entouré la surface externe périphérique SE de la cartouche de la figure 1 par une feuille souple 5 dont une extrémité 5a est fixée sur la surface externe de la cartouche selon une génératrice de celle-ci et dont l'autre extrémité 5b est libre. De préférence, la feuille souple est constituée par un clinquant en acier et elle présente une forme rectangulaire. D'autre part, la fixation de la feuille souple sur la cartouche est réalisée par soudure, de préférence par deux points de soudure 5c prévus à chaque bout de l'extrémité 5a.

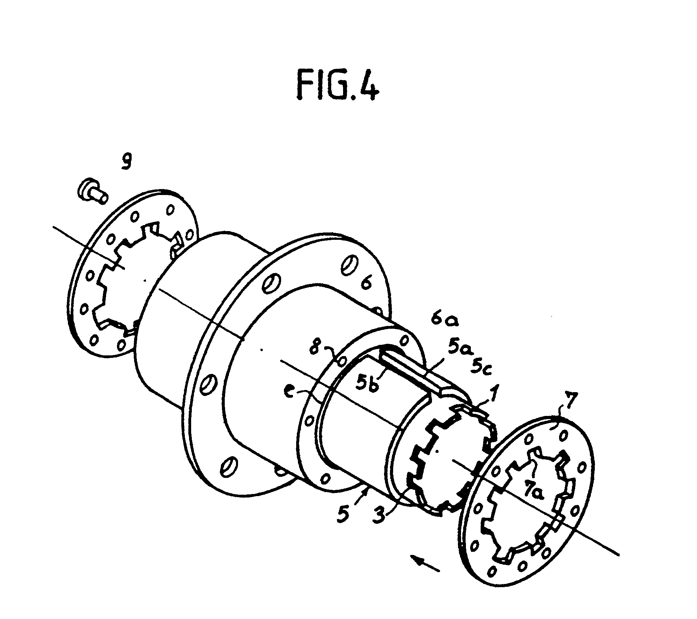

D'autre part, comme représenté sur la figure 4, la longueur entre l'extrémité 5a et l'extrémité 5b est inférieure à la circonférence de la cartouche 1 de manière à laisser, une fois monté, un jeu $\varepsilon$ entre les deux bords. De plus, la dimension de la feuille souple est inférieure à la longueur de la cartouche 1 de manière à ne pas entourer par la feuille souple les marges 3 comportant les soudures des feuilles entre elles.

On expliquera maintenant avec référence à la figure 4 le procédé de montage d'un palier hydrodynamique utilisant une cartouche telle que représentée à la figure 3. Le corps de palier 6 utilisé dans ce cas présente un alésage interne lisse, simplement doté sur ces deux champs 6a de trous borgnes taraudés tels que 8.

La cartouche appelée à équiper le corps 6 a été réalisée sur le plan dimensionnel de façon que le diamètre de l'ensemble cartouche proprement dite 1 et feuille souple 5 soit légèrement supérieur à celui de l'alésage du corps. Pour insérer la cartouche constituée de la cartouche proprement dite et de la feuille souple dans cet alésage, on place le corps de palier 6 dans une enceinte chauffée de préférence à une température supérieure à 200°C. Le corps de palier est réalisé dans un alliage qui se dilate à la température de chauffage de l'enceinte donnant un jeu e qui permet d'insérer l'ensemble cartouche et feuille souple par poussée axiale à l'intérieur de l'alésage. Cette insertion est réalisée jusqu'à ce que l'ensemble soit positionné à l'intérieur du corps 5 avec les seules marges crantées 3 dépassant de chaque côté de celui-ci.

On immobilise ensuite l'ensemble cartouche et feuille souple au moyen de deux rondelles en forme de couronne telles que 7 qui possèdent un crantage interne 7a adapté au crantage de la cartouche. Les deux crantages sont imbriqués l'un dans l'autre et empêchent tout mouvement de rotation de la cartouche à l'intérieur de l'alésage. D'autre part, des vis telles que 9 permettent la fixation des rondelles 7 sur les champs du corps de palier 6.

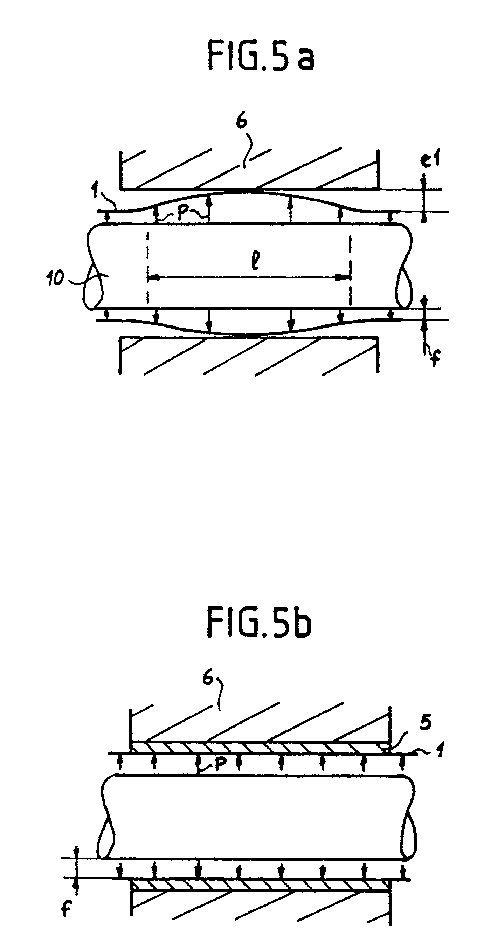

Ensuite, on laisse refroidir le corps de palier de telle sorte que le jeu e disparaîsse, comme représenté sur la figure 5b qui, en relation avec la figure 5a représentant l'art antérieur, montre schématiquement les avantages de la présente invention.

Avec le nouvel ensemble cartouche-feuille souple, il n'est plus nécessaire d'avoir un jeu de montage e1 (voir figure 5a). Ce jeu de montage e1 était nécessaire avec la cartouche du brevet EP-A-095961 pour tenir compte des déformations à chaque extrémité de la cartouche dues aux soudures de solidarisation des feuilles comme représenté sur la figure 5a. Ce jeu de montage s'ajoute au jeu de fonctionnement f. En fonctionnement, ceci peut donner un jeu total trop important sur toute la partie centrale L du palier sous l'effet de la pression P. Avec la cartouche de l'art antérieur, si on diminue le jeu de montage e1 pour améliorer le fonctionnement au centre, le jeu de montage devient alors trop faible aux extrémités qui, en fonctionnement, viennent alors au contact de l'arbre 10. Avec la présente invention, il n'y a plus de jeu de montage et le jeu de fonctionnement est uniforme sur toute la longueur du palier.

Ainsi, l'ensemble cartouche et feuille souple conforme à la présente invention permet d'éviter des excentrations trop importantes en fonctionnement en augmentant la raideur dudit ensemble.

De plus, les écoulements créés à l'intérieur de la cartouche apportent de l'énergie calorifique due à la compressibilité et à la turbulence de l'air. Un tel ensemble permet donc de conserver dans tous les cas le serrage de la cartouche et de la feuille souple dans l'alésage.

## Revendications

1. Palier hydrodynamique pour supporter et guider un arbre de machine tournante, ledit palier étant du type comportant, dans l'alésage d'un corps le palier, une cartouche autonome destinée à constituer l'ensemble fonctionnel interne du palier, ladite cartouche étant composée de feuilles minces (2) cintrées fixées les unes par rapport aux antes avec des parties de recouvrement, de façon à réaliser un ensemble autonome possédant, d'une part, une surface flottante interne (SI) adaptée pour se disposer autour de l'arbre et conditionner lors de la rotation de celui-ci, la formation d'un film fluide entre l'arbre et la surface interne, et d'autre part, une surface externe périphérique (SE) de diamètre correspondant à celui de l'alésage du corps du palier, ledit palier comportant de plus des moyens pour immobiliser en rotation et en translation interne la cartouche à l'intérieur de l'alésage, la surface extérieure (SE) de la cartouche étant entourée d'une feuille additionnelle (5), caractérisé en ce que ladite feuille est souple et est fixée par une de ses extrémités (5a) sur une génératrice extérieure de la cartouche, l'autre extrémité (5b) étant libre

2. Palier hydrodynamique selon la revendication 1, caractérisé en ce que la feuille souple (5) est constituée par un clinquant en acier.

3. Palier hydrodynamique selon la revendication 1, caractérisé en ce que la feuille souple est rectangulaire.

4. Palier hydrodynamique selon l'une quelconque des revendications 1 à 3, caractérisé en ce que la longueur entre l'extrémité (5a) fixée sur la génératrice et l'extrémité libre (5b) est inférieure à la circonférence de la cartouche.

5. Palier hydrodynamique selon l'une quelconque des revendications 1 à 4, caractérisé en ce que la dimension de l'extrémité (5a) de la feuille souple fixée sur la génératrice est inférieure à la longueur de la génératrice.

6. Palier hydrodynamique selon l'une quelconque des revendications 1 à 5, caractérisé en ce que la feuille souple est fixée sur la cartouche par soudure par une de ses extrémités (5a).

7. Procédé de montage d'un palier hydrodynamique selon l'une quelconque des revendications 1 à 6, caractérisé en ce qu'il consiste à placer le corps de palier dans une enceinte chauffée, à insérer la cartouche munie de la feuille souple dans l'alésage du corps de palier, à l'immobiliser en rotation et en translation axiale par rapport à celui-ci puis à laisser refroidir l'ensemble.

8. Procédé selon la revendication 7, caractérisé en ce que l'enceinte est chauffée à une température supérieure ou égale à 200°C.

## Patentansprüche

1. Hydrodynamisches Lager zum Unterstützen und Führen einer sich drehenden Maschinenwelle, wobei das Lager von einer Bauart ist, die in einer Bohrung eines Lagerkörpers einen unabhängigen Einsatz aufweist, der die innere funktionale Einheit des Lagers bilden soll, wobei der Einsatz aus gebogenen dünnen Blechen (2) aufgebaut ist, die mittels überdeckender Teile aneinander befestigt sind, derart, daß eine unabhängige Einheit verwirklicht wird, die einerseits eine schwebende innere Oberfläche (SI), die so beschaffen ist, daß sie um die Welle angeordnet werden kann und bei ihrer Drehung die Bildung eines Fluidfilms zwischen der Welle und der inneren Oberfläche bedingt, und andererseits eine äußere Umfangsfläche (SE) mit einem Durchmesser, der demjenigen der Bohrung des Lagerkörpers entspricht, besitzt, wobei das Lager außerdem Mittel aufweist, um den Einsatz im Inneren der Bohrung in bezug auf eine innere Drehung und Verschiebung unbeweglich zu machen, wobei die Außenfläche (SE) des Einsatzes von einem zusätzlichen Blech (5) umgeben ist, dadurch gekennzeichnet, daß das Blech biegsam ist und mit einem seiner Enden (5a) an einer äußeren Erzeugenden des Einsatzes befestigt ist, während das andere Ende (5b) frei ist.

2. Hydrodynamisches Lager gemäß Anspruch 1, dadurch gekennzeichnet, daß das biegsame Blech (5) von einer Folie aus Stahl gebildet wird.

3. Hydrodynamisches Lager gemäß Anspruch 1, dadurch gekennzeichnet, daß das biegsame Blech rechteckig ist.

4. Hydrodynamisches Lager gemäß einem der Ansprüche 1 bis 3, dadurch gekennzeichnet, daß die Länge zwischen dem an der Erzeugenden befestigten Ende (5a) und dem freien Ende (5b) kleiner als der Umfang des Einsatzes ist.

5. Hydrodynamisches Lager gemäß einem der Ansprüche 1 bis 4, dadurch gekennzeichnet, daß die Größe des Endes (5a) des biegsamen Bleches, das an der Erzeugenden befestigt ist, kleiner als die Länge der Erzeugenden ist.

6. Hydrodynamisches Lager gemäß einem der Ansprüche 1 bis 5, dadurch gekennzeichnet, daß das biegsame Blech am Einsatz durch Verschweißung eines seiner Enden (5a) befestigt ist.

7. Montageverfahren eines hydrodynamischen Lagers gemäß einem der Ansprüche 1 bis 6, dadurch gekennzeichnet, daß es die Anordnung des Lagerkörpers in einem erwärmten Behälter, das Einsetzen des mit dem biegsamen Blech versehenen Einsatzes in der Bohrung des Lagerkörpers, das Unbeweglichmachen des Einsatzes in Drehrichtung und in Richtung einer axialen Verschiebung in bezug auf den Körper und dann das Abkühlenlassen der Einheit umfaßt.

8. Verfahren gemäß Anspruch 7, dadurch gekennzeichnet, daß der Behälter auf eine Temperatur, die größer oder gleich 200°C ist, aufgeheizt wird.

## Claims

1. A hydrodynamic bearing for supporting and guiding a rotary shaft of a machine, the said bearing being of the type comprising, in a bore in the body of the bearing, a self-contained cartridge adapted to constitute the internal functional member of the bearing, said cartridge being made up of thin sintered sheets (2) secured in relation to each other with the covering parts in such a manner as to form a self-contained structure having on the one hand an internal floating surface (SI) adapted to be arranged around the shaft and to cause, during rotation of the shaft, the formation of a fluid film between the shaft and the internal surface and on the other hand an external circumferential surface (SE) with a diameter corresponding to that of the bore of the body of the bearing, said bearing comprising furthermore means in order to lock the cartridge as regards rotation an internal translation within the bore, the exterior surface (SE) of the cartridge being surrounded by an additional sheet (5), characterized in that the said sheet is supple and is secured by means of one of its ends (5a) at an exterior generatrix of the cartridge, the other end (5b) being free.

2. The hydrodynamic bearing as claimed in claim 1, characterized in that the supple sheet (5) is constitute by a steel leaf.

3. The hydrodynamic bearing as claimed in claim 1, characterized in that the supple sheet is rectangular.

4. The hydrodynamic bearing as claimed in any one of the preceding claims 1 through 3, characterized in that the length between the end (5a) secured at the generatrix and the free end (5b) is less than the circumference of the cartridge.

5. The hydrodynamic bearing as claimed in any one of the preceding claims 1 through 4, characterized in that the dimension of the end (5a) of the supple sheet secured at the generatrix is less than the length of the generatrix.

6. The hydrodynamic bearing as claimed in any one of the preceding claims 1 through 5, characterized in that the supple sheet is secured on the cartridge by brazing or soldering at one of its ends (5a).

7. A method of fitting a hydrodynamic bearing as claimed in any one of the preceding claims 1 through 6, characterized in that it consists of placing the body of the bearing in a heated enclosure, of inserting the cartridge provided with the supple sheet into the bore of the bearing, of locking the same in rotation and in axial translation in relation to the latter and then cooling the structure.

8. The method as claimed in claim 7, characterized in that the enclosure is heated to a temperature above or equal to 200°C.

FIG_1

FIG_2

# FIG.3

# FIG.4

# FIG.5 a

# FIG.5b